# EUROPEAN PATENT SPECIFICATION

(11) **EP 3 326 244 B1**
(45) Date of publication and mention of the grant of the patent: **30.12.2020**
(21) Application number: 15898845.1
(22) Date of filing: 22.07.2015
(51) Int. Cl.: H01R 13/58, H01R 13/70, H02G 3/08, H01R 13/533, H01R 24/78, H02G 3/06

(54) **UNIVERSAL TOP AND BOTTOM CABLE ENTRY ELECTRICAL RECEPTACLE ASSEMBLY**
UNIVERSELLE BUCHSENANORDNUNG MIT OBEREM UND UNTEREM KABELEINGANG
ENSEMBLE PRISE ÉLECTRIQUE UNIVERSEL À ENTRÉE DE CÂBLE SUPÉRIEURE ET INFÉRIEURE

(43) Date of publication of application: 30.05.2018
(73) Proprietor: Appleton Grp LLC, Rosemont, IL 60018 (US)
(72) Inventor: SHENDGE, Vilas Subhash, Pune Maharashtra 411033 (IN); SWAMI, Shivlingayya Vishwanath, Pune Maharashtra 411027 (IN)
(74) Representative: Dehns
(86) International application number: PCT/IB2015/055550
(87) International publication number: WO 2017/013470

(56) References cited:
- WO-A1-2016/085702
- CN-A- 103 515 765
- DE-B- 1 037 549
- US-A1- 2003 134 543
- US-B1- 6 183 309
- US-B1- 6 302 743

## Description

### FIELD

The present disclosure relates to an electro-mechanical device. More specifically, the present disclosure relates to an electrical receptacle assembly.

### DEFINITIONS OF TERMS USED IN THE SPECIFICATION

The expression 'universal position' used hereinafter in this specification refers to a straight position or an upside-down position, relative to the straight position.

The definition is in addition to those expressed in the art.

### BACKGROUND

In hazardous locations, such as NEC Class I, Division 2, IEC Zone I areas, a receptacle (also known as socket) and an electrical plug is required to supply electric power to portable or fixed equipment and/or a machine such as electric motors, compressors, pumps, welding equipment, relay stations. The receptacle holds a switch and the electrical plug enables actuation of the switch to be in the ON position and the OFF position.

Conventionally, the receptacle is installed on a structure and pre-existing electrical cables are introduced in the receptacle through a pre-existing hole provided in the housing of the receptacle. Depending upon the location of the pre-existing electrical cables with respect to the installation position of the receptacle, the pre-existing cables need to be introduced either from the operative top wall or the operative bottom wall of the housing. Hence, in case where the receptacle is placed at the operative bottom with respect to the location of the pre-existing electrical cables, a hole needs to be provided on the operative top wall of the housing for the top entry of the electrical cables and in case where the receptacle is placed at the operative top with respect to the location of the pre-existing electrical cables, a hole needs to be provided on the operative bottom wall of the housing for the bottom entry of the electrical cables.

Hence, while placing an order to manufacture receptacles, it is mandatory to specify whether the hole needs to be provided on the operative top wall or the operative bottom wall of the housing depending upon the location of the pre-existing cables with respect to the receptacles.

In a situation where it was planned that the pre-existing cables will be below the installation position of the receptacle, the receptacle is manufactured with the hole at the bottom wall of the housing. But during installation, either the planned position of the pre-existing cables may be required to be changed and needs to be positioned above the installation position of the receptacle or the planned position of the pre-existing cables was wrongly planned to be below the installation position of the receptacle.

In such case, the manufactured receptacle with the hole at the bottom wall of the housing is required to be closed with an end plug and a new hole is required to be drilled in the operative top wall of the housing. Hence, additional machining is required at the top wall of the housing and additional material is required to cover the hole at the bottom wall of the housing. The requirement of the additional machining and additional material comparatively increases the installation time and the overall cost of the receptacle.

Also, in case if inventory of receptacles is required to be maintained, comparatively more inventory is required for each type of receptacle and inventory management becomes cumbersome.

Hence, there is a need of an electrical receptacle that alleviates the above mentioned problems.

WO 2016/085702 A1 discloses a plug and receptacle assembly including a housing, an actuating mechanism for manipulating a switch to ON and OFF positions, a receptacle adapted to receive a plug, a link driving member attached to the actuating mechanism, a link member adapted to move laterally when the switch is moved to the ON position, a link blocking member movable from a position where lateral movement of the link member is blocked to a position where lateral movement of the link member is allowed, wherein upon insertion of the plug into the receptacle, a notch on the plug causes the link blocking member to move into the unblocked position where the actuating mechanism is movable to have the link driving member laterally move the link member and to turn the switch from the OFF position to the ON position.

DE 10 37 519 B discloses an electrical receptacle having an upper compartment secured to a lower compartment with a switch assembly positioned within the electrical receptacle and the switch assembly is controllable by a knob positioned on the upper compartment.

### OBJECTS

Some of the objects of the present disclosure, which at least one embodiment herein satisfies, are as follows.

It is an object of the present disclosure to ameliorate one or more problems of the prior art or to at least provide a useful alternative.

An object of the present disclosure is to provide an electrical receptacle that can be universally installed on a structure based on the positioning of electrical cables.

Another object of the present disclosure is to provide an electrical receptacle that requires comparatively less installation time and less overall cost when the position of the electrical cables is changed.

Still another object of the present disclosure is to provide an electrical receptacle that requires comparatively less inventory management.

Other objects and advantages of the present disclosure will be more apparent from the following description, which is not intended to limit the scope of the present disclosure.

### SUMMARY

When viewed from one aspect, the invention provides an electrical receptacle assembly as claimed in claim 1.

When viewed from a further aspect, the invention provides a method of connecting power supply cables to an electrical receptacle as claimed in claim 8.

The present disclosure discloses an electrical receptacle assembly. The electrical receptacle assembly comprises a housing. The housing has a first compartment and a second compartment. The first compartment is defined with a first opening for a female connector to be connected to a male connector of an input power supply and a second opening for receiving a switch knob. The switch knob is defined by a slot along a central axis for receiving a spindle of the switch assembly. The second compartment is defined with at least one third opening for receiving power supply cables. A base of the second compartment is provided for fitting a switch assembly in the housing. The switch assembly defines a spindle which is required to align axially with the slot along the central axis of the switch knob. A first and a second switch assembly mounting locations on the base are provided for mounting the switch assembly thereon such that the spindle is always aligned with the central axis of the switch knob. The first mounting location is configured for use when the power supply cables arc positioned to enter the receptacle from operatively below the receptacle and the second mounting location is configured for use when the power supply cables are positioned to enter the receptacle from operatively above the receptacle. Fastners are provided for removably fitting a first compartment with the second compartment with the spindle of the switch assembly aligned and fitted into the slot of the switch knob.

Also is disclosed herein a method of connecting power supply cables to an electrical receptacle in either of two positions, in a first position when the power supply cables are positioned to enter the receptacle from operatively below the receptacle and a second position when the power output the power supply cables are positioned to enter the receptacle from operatively above the receptacle comprising the steps of fitting a switch assembly defining a spindle on one of two sets of mounting locations on a base of one of the compartments of the electrical receptacle, one set configured to accept the switch assembly for the first position and the second set configured to accept the switch assembly for the second position between the receptacle and the power supply cables, selecting one of two openings for mounting a cable gland on the top or the bottom wall of the electrical receptacle for leading the power supply cables into the receptacle, threading the power supply cables through the cable gland and fitting the other compartment of the electrical receptacle bearing a switch knob defining a slot along a central axis in an aligned configuration with the spindle of the switch assembly.

### BRIEF DESCRIPTION OF ACCOMPANYING DRAWINGS

Figure 1 illustrates an exploded perspective view of a receptacle wherein a switch assembly is mounted on a first switch assembly mounting location such that the axis of the spindle of the switch assembly is axially aligned to a slot along a central axis of a switch knob mounted on a first compartment of the electrical receptacle assembly and the power supply cables are disposed from operative bottom of the receptacle, in accordance with one embodiment of the present disclosure;
Figure 2 illustrates a front view of the receptacle of Figure 1;
Figure 3 illustrates an exploded perspective view of a receptacle wherein a switch assembly is mounted on a second switch assembly mounting location such that the axis of the spindle of the switch assembly is axially aligned to a slot along a central axis of a switch knob mounted on a first compartment of the electrical receptacle assembly and the power supply cables are disposed from operative top of the receptacle, in accordance with another embodiment of the present disclosure;
Figure 4 illustrates a front view of the receptacle of Figure 3;
Figure 5a illustrates a top view of a second compartment of a housing of the receptacle of Figure 1, wherein the switch assembly is mounted on the first switch assembly mounting location;
Figure 5b illustrates a top view of the second compartment of Figure 5a without the switch assembly;
Figure 6a illustrates a top view of the second compartment of the housing of the receptacle of Figure 3, wherein the switch assembly is mounted on the second switch assembly mounting location; and
Figure 6b illustrates a top view of the second compartment of Figure 6a depicting the first and second switch assembly mounting locations without the switch assembly.

### DETAILED DESCRIPTION

The disclosure will now be described with reference to the accompanying embodiments which do not limit the scope and ambit of the disclosure. The description provided is purely by way of example and illustration.

The embodiments herein and the various features and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

An electrical receptacle of the present disclosure can be universally installed on a structure based on the positioning of electrical cables. The electrical receptacle requires comparatively less installation time and less overall cost when the position of the electrical cables is changed. The electrical receptacle of the present disclosure requires comparatively less inventory management.

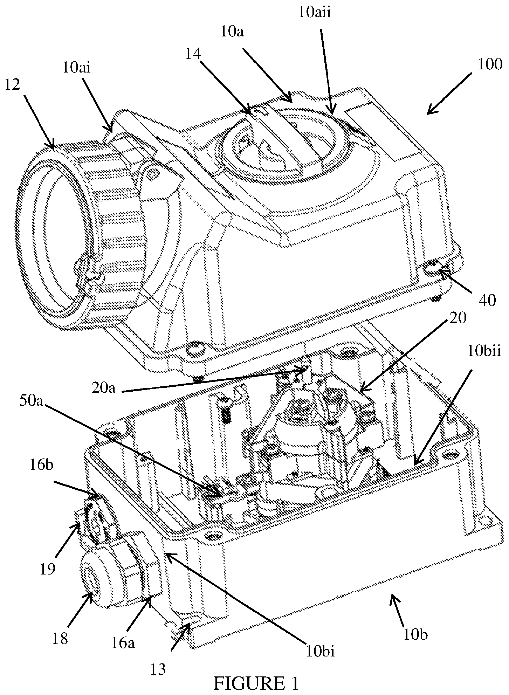

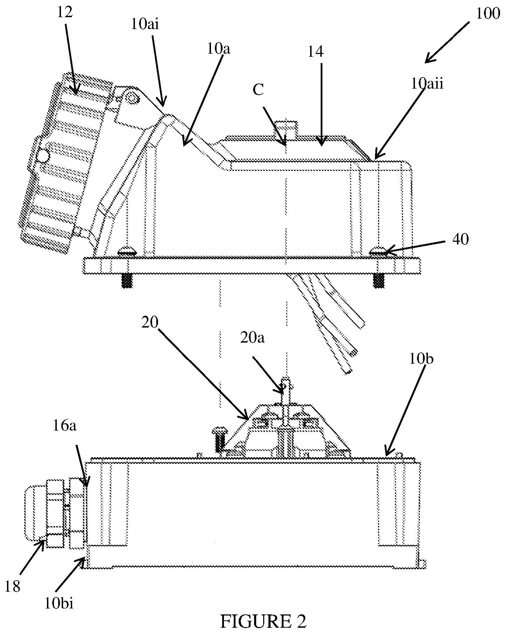

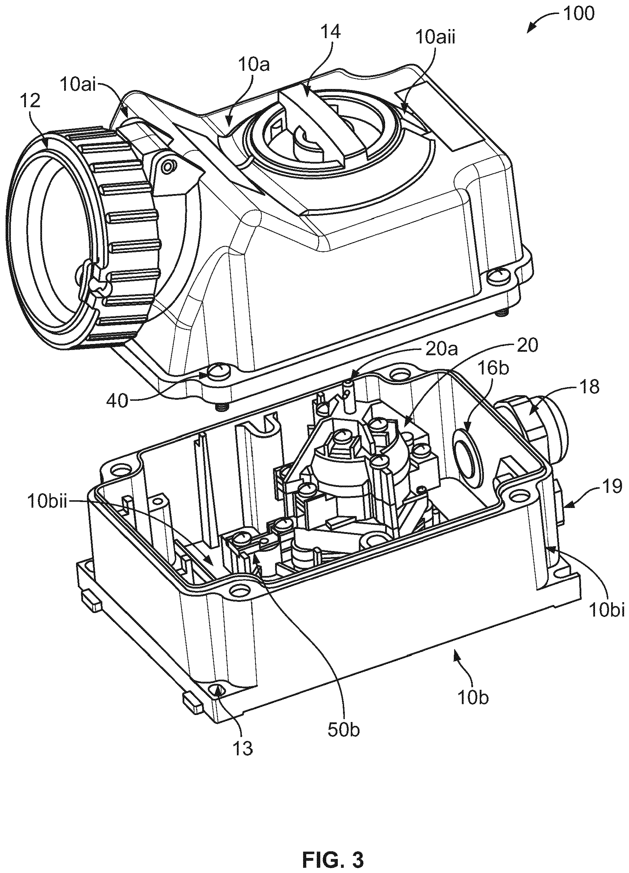

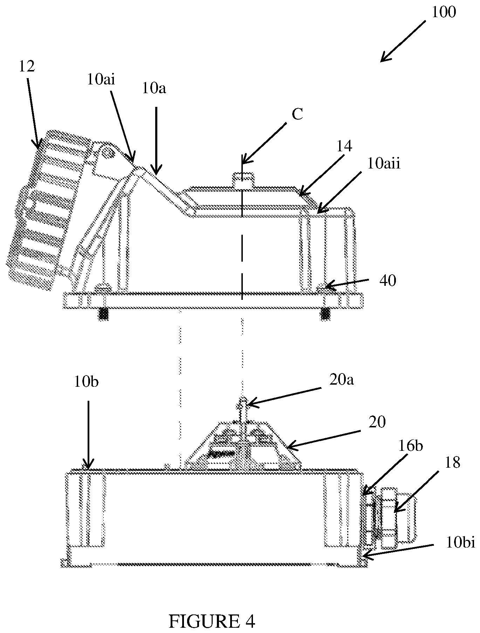

Figure 1 to Figure 4 illustrates the electrical receptacle assembly **100.** The electrical receptacle assembly **100** comprises a housing. The housing comprises a first compartment **10a** and a second compartment **10b**. The first compartment **10a** is defined by a first opening **10ai** for a female connector (not illustrated in Figures) which is housed in a sleeve (not illustrated in Figures) and covered by a cover **12.** The female connector can be connected to a male connector (not illustrated in Figures) of an input power supply to equipment and/or a machine such as electric motors, compressors, pumps, welding equipment, relay stations. The first compartment **10a** further has a second opening **10aii** which receives a switch knob **14.** The switch knob **14** defines a slot (not illustrated in Figures) along a central axis 'C'. The second compartment **10b** includes mounting holes **13** for mounting the electrical receptacle assembly **100** to a structure (not illustrated in Figures) such as a wall or a pole or a cabinet and the like.

The second compartment **10b** is defined with at least one third opening **16a** for receiving power supply cables (not illustrated in Figures). In one embodiment, at least one third opening **16a** is configured to receive a cable gland **18** through which the power supply cables are led into the electrical receptacle assembly **100.** In one embodiment, two third openings **16a** and **16b** are provided on the operative bottom wall **10bi** of the second compartment **10b** for fixing the cable gland **18** in the two operative positions of the power supply cables with respect to the electrical receptacle assembly **100** in either of the two third openings **16a** and **16b,** the un-operative third opening **16b** being sealed with a plug **19.** Typically, the third opening **16a** is configured to receive power supply cables along an orthogonal operative vertical axis. In another embodiment, two third openings may be provided on the operative top walls of the electrical receptacle assembly **100.**

Further, the second compartment **10b** has a base **10bii** for fitting a switch assembly **20** in the housing. The switch assembly **20** is defined by a spindle **20a** which is required to align axially with the slot along the central axis 'C' of the switch knob **14.**

A first switch assembly mounting location **30a** and a second switch assembly mounting location **30b** is provided on the base **10bii** for mounting the switch assembly **20** thereon such that the spindle **20a** is always aligned with the central axis 'C' of the switch knob **14.** The first switch assembly mounting location **30a** is configured for use when the power supply cables are positioned to enter the electrical receptacle assembly **100** from operatively below the electrical receptacle assembly **100** and the second mounting location **30b** is configured for use when the power supply cables are positioned to enter the electrical receptacle assembly **100** from operatively above the electrical receptacle assembly **100.** In one embodiment, the first switch assembly mounting location **30a** and the second switch assembly mounting location **30b** are formed on the base **10bii** in form of a hexagon, the first switch assembly mounting location **30a** and the second switch assembly mounting location **30b** are defined at the vertices of the hexagon.

Further, fastners **40** are provided for removably fitting a first compartment **10a** with the second compartment **10b** with the spindle **20a** of the switch assembly **20** aligned and fitted into the slot defined along the central axis 'C' of the switch knob **14.** In one embodiment, the fastners are bolts.

In accordance with one embodiment, the base **10bii** includes locations **50a** and **50b** for fitting an earthing cable within the electrical receptacle assembly **100** in the two positions of the receptacle assembly **100.**

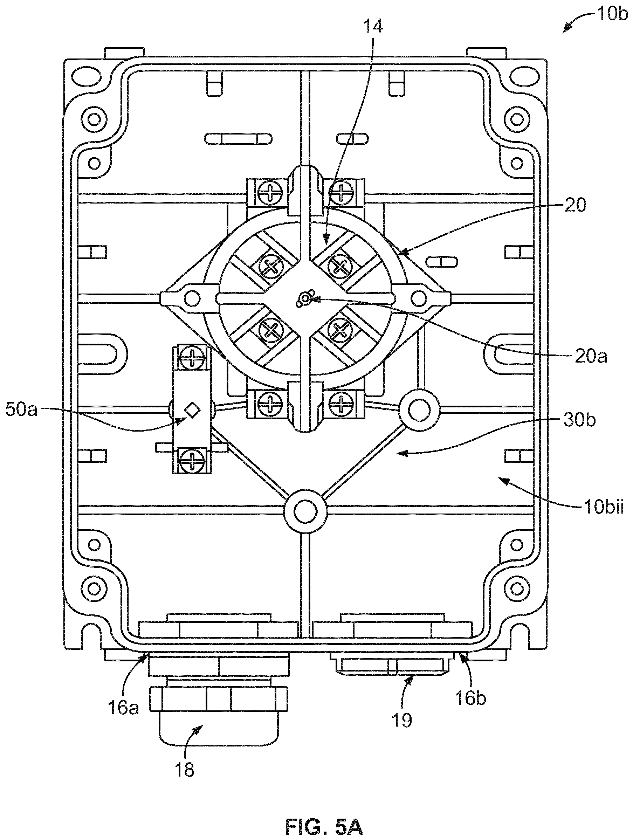

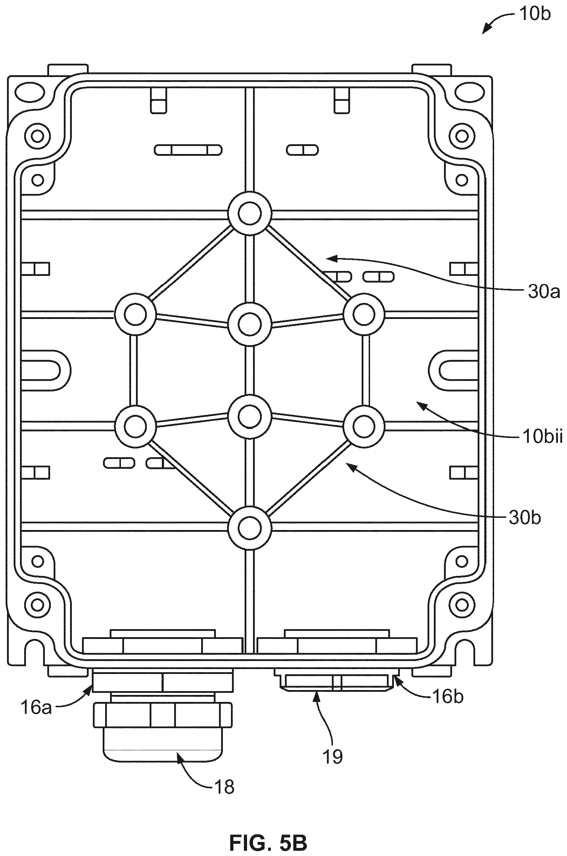

In accordance with another aspect of the disclosure, there is provided a method of connecting power supply cables to the electrical receptacle assembly **100** in a first position when the power supply cables are positioned to enter the electrical receptacle assembly **100** from operative below of the electrical receptacle assembly **100** is disclosed. Initially, the switch assembly **20** which is defined by the spindle **20a** is mounted on the second switch assembly mounting location **30b** (which is a second position) provided on the base **10bii** of the second compartment **10b** of the electrical receptacle assembly **100** is positioned to the first switch assembly mounting location **30a** as illustrated in Figure 5a and Figure 5b. There-after, the cable gland **18** is removed from the third opening **16b** and positioned on the third opening **16a** for leading the power supply cables into the electrical receptacle assembly **100.** The power supply cables are then threaded through the cable gland **18** positioned at the third opening **16a.** There-after, the first compartment **10a** is fitting to the second compartment **10b** such that the central axis 'C' of the slot is aligned with the axis of the spindle **20a** of the switch assembly **20.**

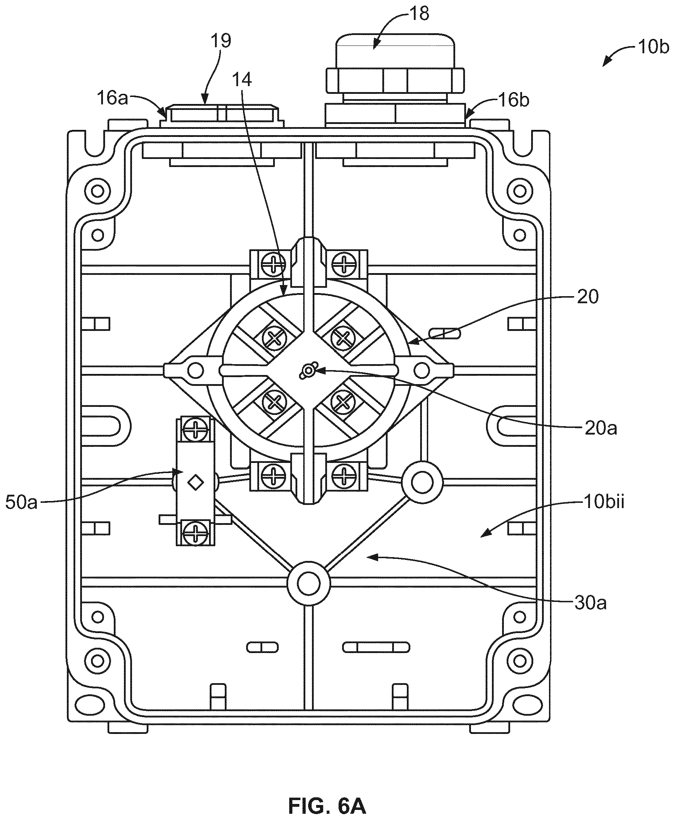

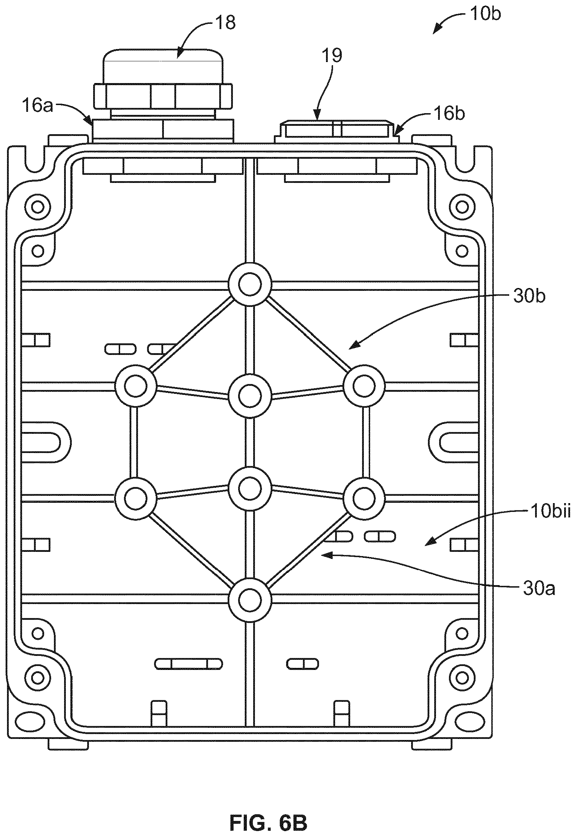

In a second position the power supply cables are positioned to enter the electrical receptacle assembly **100** operatively above the electrical receptacle assembly **100.** Initially, the switch assembly **20** which is defined by the spindle **20a** is mounted on the first switch assembly mounting location **30a** (which is a first position) provided on the base **10bii** of the second compartment **10b** of the electrical receptacle assembly **100** is positioned to the second switch assembly mounting location **30b** as illustrated in Figure 6a and Figure 6b. There-after, the cable gland **18** is removed from the third opening **16a** and positioned on the third opening **16b** for leading the power supply cables into the electrical receptacle assembly **100.** The power supply cables are then threaded through the cable gland **18** positioned at the third opening **16b.** There-after, the first compartment **10a** is fitted to the second compartment **10b** such that the central axis 'C' of the slot is aligned with the axis of the spindle **20a** of the switch assembly **20.**

The electrical receptacle assembly **100** can be mounted in a universal position for receiving the power supply cables from either operative top or operative bottom of the electrical receptacle assembly **100** based on the positioning of power supply cables. In case during installation of the electrical receptacle assembly **100,** either if the planned position of the power supply cables is changed or the planned position of the power supply cables which was wrongly planned to be above or below the installation position of the electrical receptacle assembly **100** is changed, the positioning of the electrical receptacle assembly **100** may be comparatively easily changed to suit the new installation requirements without requirement of additional machining as required in conventional receptacles. Hence, the electrical receptacle assembly **100** requires comparatively less installation time and less overall cost during change in installation requirements.

Further, in case if inventory of the electrical receptacle assembly **100** is required to be maintained, less inventory is required to be maintained as the electrical receptacle assembly **100** is manufactured with a single configuration which can be used to receive the power supply cables through the operative top as well as the operative bottom of the electrical receptacle assembly **100** as compared to conventional receptacles wherein inventory is required to be maintained for two different configurations one for receiving the power supply cables through the operative top and another for receiving the power supply cables through the operative bottom of conventional receptacles. Hence, the inventory management of the electrical receptacle assembly **100** is comparatively less cumbersome.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the disclosure to achieve one or more of the desired objects or results.

The numerical values mentioned for the various physical parameters, dimensions or quantities are only approximations and it is envisaged that the values higher/lower than the numerical values assigned to the parameters, dimensions or quantities fall within the scope of the disclosure, unless there is a statement in the specification specific to the contrary.

While considerable emphasis has been placed herein on the components and component parts of the preferred embodiments, it will be appreciated that many embodiments can be made and that many changes can be made in the preferred embodiments without departing from the principles of the disclosure. These and other changes in the preferred embodiment as well as other embodiments of the disclosure will be apparent to those skilled in the art from the disclosure herein, whereby it is to be distinctly understood that the foregoing descriptive matter is to be interpreted merely as illustrative of the disclosure and not as a limitation

### TECHNICAL ADVANCES AND ECONOMICAL SIGNIFICANCE

The electrical receptacle assembly of the present disclosure described herein above has several technical advantages including but not limited to the realization of:
- an electrical receptacle that can be easily installed on a structure at any angular position based on the positioning of electrical cables;
- an electrical receptacle that requires comparatively less installation time and less overall cost when the position of the electrical cables is changed; and
- an electrical receptacle that requires comparatively less inventory management.

## Claims

1. An electrical receptacle assembly (100) comprising:
a housing comprising:
a first compartment (10a) defining a first opening (10ai) for a female connector to be connected to a male connector of an input power supply and a second opening for receiving a switch knob (14), said switch knob (14) defining a slot along a central axis;
a second compartment (10b) defining at least one third opening (16a) for receiving power supply cables, a base (10bii) being provided for fitting a switch assembly (20) in said housing, said switch assembly (20) defining a spindle (20a) which is required to align axially with the slot along the central axis (C) of the switch knob (14);
the electrical receptacle assembly further comprising:
a first and a second switch assembly mounting locations (30a, 30b) on said base (10bii) being provided for mounting said switch assembly (20) thereon such that the spindle (20a) is always aligned with the central axis (C) of the switch knob (14), said first mounting location (30a) configured for use when the power supply cables are positioned to enter the receptacle from operatively below the receptacle and the second mounting location (30b) being configured for use when the power supply cables are positioned to enter the receptacle from operatively above the receptacle; and
fasteners for removably fitting the first compartment (10a) with the second compartment (10b) with the spindle (20a) of the switch assembly (20) aligned and fitted into the slot of the switch knob (14).

2. The electrical receptacle assembly as claimed in claim 1, wherein the receptacle is configured to receive power supply cables along an orthogonal axis to the operative top or bottom wall.

3. The electrical receptacle assembly as claimed in claim 1, wherein said at least one third opening (16a) is configured to receive a cable gland (18) through which the power supply cables are led into the receptacles.

4. The electrical receptacle assembly as claimed in claim 1, wherein two third openings (16a, 16b) are provided on at least one of the operative bottom wall (lObi) and the operative top wall of the second compartment (10b) for fixing the cable gland (18) in the two operative positions of the power supply cables with respect to the receptacle in either of the two third openings, the un-operative third opening being sealed with a plug (19).

5. The electrical receptacle assembly as claimed in claim 1, wherein the mounting locations are formed on the base (10bii) in form of a hexagon, the locations being defined at the vertices of the hexagon.

6. The electrical receptacle assembly as claimed in claim 1, wherein the mounting locations include a location (50a) for fitting an earthing cable within the receptacle.

7. The electrical receptacle assembly as claimed in claim 1, wherein the lower compartment (10b) includes a mounting hole (13) for mounting the receptacle to a structure.

8. A method of connecting power supply cables to an electrical receptacle (100) in either of two positions, in a first position when the power supply cables are positioned to enter the receptacle (100) from operatively below the receptacle and a second position when the power supply cables are positioned to enter the receptacle from operatively above the receptacle (100) comprising the following steps:
fitting a switch assembly (20) defining a spindle (20a) on one of two sets of mounting locations (30a, 30b) on a base (10bii) of one of two compartments (10a, 10b) of the electrical receptacle (100), one set of mounting locations (30a) configured to accept the switch assembly (20) for a first position and the second set of mounting locations (30b) configured to accept the switch assembly (20) for a second position between the receptacle (100) and the power supply cables;
selecting one of two openings for mounting a cable gland on one of the operative top wall and the operative bottom wall (10bi) of the electrical receptacle (100) for leading the power supply cables into said receptacles;
threading the power supply cables through said cable gland (18); and
fitting the other compartment of the electrical receptacle (100) bearing a switch knob (14) defining a slot along a central axis (C) in an aligned configuration with the spindle (20a) of the switch assembly (20).

## Patentansprüche

1. Elektrische Anschlussbuchsenanordnung (100) umfassend:
ein Gehäuse, umfassend:
eine erste Abteilung (10a), welche eine erste Öffnung (10ai) für eine Buchse, welche mit einem Stecker einer Eingangsstromversorgung verbunden wird, und eine zweite Öffnung zum Aufnehmen eines Schaltknopfs (14) definiert, wobei der Schaltknopf (14) einen Schlitz entlang einer Mittelachse definiert;
eine zweite Abteilung (10b), welche zumindest eine dritte Öffnung (16a) zum Aufnehmen von Stromversorgungskabeln definiert, wobei ein Sockel (10bii) zum Einpassen einer Schalteranordnung (20) in dem Gehäuse bereitgestellt ist, wobei die Schalteranordnung (20) eine Spindel (20a) definiert, welche axial mit der Schlitz entlang der Mittelachse (C) des Schaltknopfs (14) ausgerichtet sein muss;
wobei die elektrische Anschlussbuchsenanordnung weiter umfasst:
einen ersten und einen zweiten Schalteranordnungsmontageort (30a, 30b) auf dem Sockel (10bii), welche zum Montieren der Schalteranordnung (20) darauf bereitgestellt sind, sodass die Spindel (20a) immer mit der Mittelachse (C) des Schaltknopfs (14) ausgerichtet ist, wobei der erste Montageort (30a) zum Gebrauch konfiguriert ist, wenn die Stromversorgungskabel positioniert sind, um von operativ unterhalb der Anschlussbuchse in die Anschlussbuchse zu gelangen, und der zweite Montageort (30b) zum Gebrauch konfiguriert ist, wenn die Stromversorgungskabel positioniert sind, um von operativ oberhalb der Anschlussbuchse in die Anschlussbuchse zu gelangen; und
Befestigungsmittel zum lösbaren Einpassen der ersten Abteilung (10a) mit der zweiten Abteilung (10b), wobei die Spindel (20a) der Schalteranordnung (20) mit dem Schlitz des Schaltknopfs (14) ausgerichtet und eingepasst ist.

2. Elektrische Anschlussbuchsenanordnung nach Anspruch 1, wobei die Anschlussbuchse konfiguriert ist, um Stromversorgungskabel entlang einer orthogonalen Achse zu der operativen oberen oder unteren Wand aufzunehmen.

3. Elektrische Anschlussbuchsenanordnung nach Anspruch 1, wobei die zumindest eine dritte Öffnung (16a) konfiguriert ist, um einen Kabelflansch (18) aufzunehmen, durch welchen die Stromversorgungskabel in die Anschlussbuchsen geführt werden.

4. Elektrische Anschlussbuchsenanordnung nach Anspruch 1, wobei zwei dritte Öffnungen (16a, 16b) in zumindest einer von der operativen unteren Wand (10bi) und der operativen oberen Wand der zweiten Abteilung (10b) zum Einpassen des Kabelflansches (18) in die zwei operativen Positionen der Stromversorgungskabel in Bezug auf die Anschlussbuchse in einer von den zwei dritten Öffnungen bereitgestellt sind, wobei die nicht operative dritte Öffnung mit einem Stopfen (19) verschlossen wird.

5. Elektrische Anschlussbuchsenanordnung nach Anspruch 1, wobei die Montageorte auf dem Sockel (10bii) in Form eines Sechsecks gebildet sind, wobei die Orte an den Eckpunkten des Sechsecks definiert sind.

6. Elektrische Anschlussbuchsenanordnung nach Anspruch 1, wobei die Montageorte einen Ort (50a) zum Einpassen eines Erdungskabels innerhalb der Anschlussbuchse beinhalten.

7. Elektrische Anschlussbuchsenanordnung nach Anspruch 1, wobei die untere Abteilung (10b) ein Montageloch (13) zum Montieren der Anschlussbuchse an einer Struktur beinhaltet.

8. Verfahren zum Verbinden von Stromversorgungskabeln mit einer elektrischen Anschlussbuchse (100) in einer von zwei Positionen, in einer ersten Position, wenn die Stromversorgungskabel positioniert sind, um von operativ unterhalb der Anschlussbuchse in die Anschlussbuchse (100) zu gelangen, und einer zweiten Position, wenn die Stromversorgungskabel positioniert sind, um von operativ oberhalb der Anschlussbuchse (100) in die Anschlussbuchse zu gelangen, welches die folgenden Schritte umfasst:
Einpassen einer Schalteranordnung (20), welche eine Spindel (20a) auf einer von zwei Sätzen von Montageorten (30a, 30b) auf einem Sockel (10bii) einer von zwei Abteilungen (10a, 10b) der elektrischen Anschlussbuchse (100) definiert, wobei ein Satz von Montageorten (30a) konfiguriert ist, um die Schalteranordnung (20) für eine erste Position zu akzeptieren, und der zweite Satz von Montageorten (30b) konfiguriert ist, um die Schalteranordnung (20) für eine zweite Position zwischen der Anschlussbuchse (100) und den Stromversorgungskabeln zu akzeptieren;
Auswählen einer von zwei Öffnungen zum Montieren eines Kabelflansches in einer der operativen oberen Wand und der operativen unteren Wand (10bi) der elektrischen Anschlussbuchse (100) zum Führen der Stromversorgungskabel in die Anschlussbuchsen;
Winden der Stromversorgungskabel durch den Kabelflansch (18); und
Einpassen der anderen Abteilung der elektrischen Anschlussbuchse (100), welche einen Schaltknopf (14) trägt, welcher einen Schlitz entlang einer Mittelachse (C) in einer ausgerichteten Konfiguration mit der Spindel (20a) der Schalteranordnung (20) definiert.

## Revendications

1. Ensemble prise électrique (100) comprenant :
un boîtier comprenant :
un premier compartiment (10a) définissant une première ouverture (10ai) destinée à une prise femelle devant être connectée à une prise mâle d'une alimentation électrique d'entrée et une deuxième ouverture destinée à recevoir un bouton de commutateur (14), ledit bouton de commutateur (14) définissant une fente le long d'un axe central ;
un second compartiment (10b) définissant au moins une troisième ouverture (16a) destinée à recevoir des câbles d'alimentation électrique, une base (10bii) étant prévue pour fixer un ensemble commutateur (20) dans ledit boîtier, ledit ensemble commutateur (20) définissant une broche (20a) qui doit s'aligner axialement avec la fente le long de l'axe central (C) du bouton de commutateur (14) ;
l'ensemble prise électrique comprenant en outre :
un premier et un second emplacements de montage d'ensemble commutateur (30a, 30b) sur ladite base (10bii) prévus pour supporter ledit ensemble commutateur (20) de telle sorte que la broche (20a) est toujours alignée avec l'axe central (C) du bouton de commutateur (14), ledit premier emplacement de montage (30a) étant configuré pour être utilisé lorsque les câbles d'alimentation électrique sont positionnés pour entrer dans la prise à partir d'une position opérationnelle en dessous de la prise et le second emplacement de montage (30b) étant configuré pour être utilisé lorsque les câbles d'alimentation électrique sont positionnés pour entrer dans la prise à partir d'une position opérationnelle au-dessus de la prise ; et
des attaches destinées à fixer de manière amovible le premier compartiment (10a) avec le second compartiment (10b) avec la broche (20a) de l'ensemble commutateur (20) alignée et fixée dans la fente du bouton de commutateur (14).

2. Ensemble prise électrique selon la revendication 1, dans lequel la prise est configurée pour recevoir des câbles d'alimentation électrique le long d'un axe orthogonal à la paroi supérieure ou inférieure opérationnelle.

3. Ensemble prise électrique selon la revendication 1, dans lequel ladite au moins une troisième ouverture (16a) est configurée pour recevoir un presse-étoupe (18) à travers lequel les câbles d'alimentation électrique sont amenés dans les prises.

4. Ensemble prise électrique selon la revendication 1, dans lequel deux troisièmes ouvertures (16a, 16b) sont prévues sur au moins une de la paroi inférieure opérationnelle (10bi) et de la paroi supérieure opérationnelle du second compartiment (10b) pour fixer le presse-étoupe (18) dans les deux positions opérationnelles des câbles d'alimentation électrique par rapport à la prise dans l'une ou l'autre des deux troisièmes ouvertures, la troisième ouverture non opérationnelle étant fermée hermétiquement avec un obturateur (19).

5. Ensemble prise électrique selon la revendication 1, dans lequel les emplacements de montage sont formés sur la base (10bii) sous forme d'un hexagone, les emplacements étant définis aux sommets de l'hexagone.

6. Ensemble prise électrique selon la revendication 1, dans lequel les emplacements de montage incluent un emplacement (50a) pour insérer un câble de mise à la terre à l'intérieur de la prise.

7. Ensemble prise électrique selon la revendication 1, dans lequel le compartiment inférieur (10b) inclut un trou de montage (13) pour monter la prise sur une structure.

8. Procédé de connexion de câbles d'alimentation électrique à une prise électrique (100) dans l'une ou l'autre de deux positions, dans une première position lorsque les câbles d'alimentation électrique sont positionnés pour entrer dans la prise (100) à partir d'une position opérationnelle en dessous de la prise et une seconde position lorsque les câbles d'alimentation électrique sont positionnés pour entrer dans la prise à partir d'une position opérationnelle au-dessus de la prise (100) comprenant les étapes suivantes :
la fixation d'un ensemble commutateur (20) définissant une broche (20a) sur un de deux ensembles d'emplacements de montage (30a, 30b) sur une base (10bii) d'un de deux compartiments (10a, 10b) de la prise électrique (100), un ensemble d'emplacements de montage (30a) étant configuré pour accepter l'ensemble commutateur (20) pour une première position et le second ensemble d'emplacements de montage (30b) étant configuré pour accepter l'ensemble commutateur (20) pour une seconde position entre la prise (100) et les câbles d'alimentation électrique ;
la sélection d'une de deux ouvertures pour monter un presse-étoupe sur une de la paroi supérieure opérationnelle et de la paroi inférieure opérationnelle (10bi) de la prise électrique (100) pour conduire les câbles d'alimentation électrique dans lesdites prises ;
l'introduction des câbles d'alimentation électrique à travers ledit presse-étoupe (18) ; et
la fixation de l'autre compartiment de la prise électrique (100) supportant un bouton de commutateur (14) définissant une fente le long d'un axe central (C) dans une configuration alignée avec la broche (20a) de l'ensemble commutateur (20).
